# EUROPEAN PATENT APPLICATION

(11) **EP 4 044 072 A1**
(43) Date of publication of application: **17.08.2022**
(21) Application number: 22153754.1
(22) Date of filing: 27.01.2022
(51) Int. Cl.: G06N 5/02, G06N 20/00, G06N 5/00, G06N 5/04, G06F 11/07, G06Q 10/00

(54) **SEMI-CROWDSOURCED EXPERT-IN-THE-LOOP METHOD FOR THE EXTRACTION AND COMPILATION OF DIAGNOSIS AND REPAIR KNOWLEDGE**

(30) Priority: 04.02.2021 US 202117167868
(71) Applicant: Robert Bosch GmbH, 70442 Stuttgart (DE)
(72) Inventor: Huang, Kevin, Pittsburgh, PA, 15218 (US); Kim, Ji Eun, Pittsburgh, PA, 15217 (US)

(57) **Abstract**

Semi-crowdsourced expert-in-the-loop information capture is provided. Solution search criteria for a repair problem are obtained from one or more of expert user, machine algorithm, or crowd worker. A search is conducted according to the solution search criteria to identify search results. The search results are filtered according to relevance and likelihood of containing confirmed solutions using a confirmed-solution classifier. The search results are provided to crowd workers for analysis to find and extract confirmed solutions. If the solutions do not exist in a knowledge base, the extracted confirmed solutions are provided for expert review and adding the extracted confirmed solutions, as reviewed, to the knowledge base. Otherwise if the solutions already exist in the knowledge base, the extracted confirmed solutions are used to retrain the confirmed-solution classifier.

## Description

### TECHNICAL FIELD

Aspects of the disclosure generally relate to a semi-crowdsourced expert-in-the-loop method for extraction and compilation of diagnosis and repair knowledge.

### BACKGROUND

Consumers often go to technicians with problems that are beyond the technicians' experience. When this occurs, the technicians consult a diagnosis-and-repair knowledge base.

### SUMMARY

In one or more illustrative examples, a method for semi-crowdsourced expert-in-the-loop information capture is provided. Solution search criteria for a repair problem are obtained from one or more of an expert user, machine algorithm, or crowd worker. A search is conducted according to the solution search criteria to identify search results. The search results are filtered according to relevance and likelihood of containing confirmed solutions using a confirmed-solution classifier. The search results are provided to crowd workers for analysis to find and extract confirmed solutions. If the solutions do not already exist in a knowledge base, the extracted confirmed solutions are provided for expert review and adding the extracted confirmed solutions, as reviewed, to the knowledge base. Otherwise if the solutions already exist in the knowledge base, the extracted confirmed solutions are used to retrain the confirmed-solution classifier.

In one or more illustrative examples, a system for semi-crowdsourced expert-in-the-loop information capture is provided. The system includes a computing platform including a hardware processor. The processor is programmed to obtain solution search criteria for a repair problem from one or more of an expert user, machine algorithm, or crowd worker; conduct a search according to the solution search criteria to identify search results; filter the search results according to relevance and likelihood of containing confirmed solutions using a confirmed-solution classifier; and provide the search results to crowd workers for analysis to find and extract confirmed solutions. The processor is programmed to, if the solutions do not exist in a knowledge base, provide the extracted confirmed solutions for expert review and adding the extracted confirmed solutions, as reviewed, to the knowledge base; and otherwise if the solutions already exist in the knowledge base, use the extracted confirmed solutions to retrain the confirmed-solution classifier.

In one or more illustrative examples, a non-transitory computer readable medium including instructions for semi-crowdsourced expert-in-the-loop information capture is provided. When the instructions are executed by a processor of a computing device, the computing device is programmed to obtain solution search criteria for a repair problem from one or more of an expert user, machine algorithm, or crowd worker; conduct a search according to the solution search criteria to identify search results; filter the search results according to relevance and likelihood of containing confirmed solutions using a confirmed-solution classifier; provide the search results to crowd workers for analysis to find and extract confirmed solutions; if the solutions do not exist in a knowledge base, provide the extracted confirmed solutions for expert review and adding the extracted confirmed solutions, as reviewed, to the knowledge base; and otherwise if the solutions already exist in the knowledge base, use the extracted confirmed solutions to retrain the confirmed-solution classifier.

### BRIEF DESCRIPTION OF THE DRAWINGS

FIG. 1 illustrates a flow chart of a process for semi-crowdsourced expert-in-the-loop solution extraction for knowledge base building;
FIG. 2 illustrates an example system for the semi-crowdsourced expert-in-the-loop solution extraction for knowledge base building;
FIG. 3 illustrates an example process of forum classification and extraction for posts of a forum universal resource locator (URL);
FIG. 4 illustrates an example process of scoring URLs with content matching;
FIG. 5 illustrates an example template user interface for crowd workers to find and extract confirmed solutions from a machine-located forum thread;
FIGS. 6A, 6B, and 6C each illustrate example template user interfaces for expert review of extracted solutions from crowd workers; and
FIG. 7 illustrates an example computing device for use in the semi-crowdsourced expert-in-the-loop solution extraction for knowledge base building.

### DETAILED DESCRIPTION

As required, detailed embodiments of the present invention are disclosed herein; however, it is to be understood that the disclosed embodiments are merely exemplary of the invention that may be embodied in various and alternative forms. The figures are not necessarily to scale; some features may be exaggerated or minimized to show details of particular components. Therefore, specific structural and functional details disclosed herein are not to be interpreted as limiting, but merely as a representative basis for teaching one skilled in the art to variously employ the present invention.

When domain experts compile a problem-solution knowledge base for diagnosis and repair, they are usually given a list of problems for which they conduct extensive online search to find valid solutions. A solution is deemed valid if someone confirms that it solved the problem. For example, when given a problem such as "Honda Accord shakes when going above 50 MPH", the domain expert may search online web forums for discussions regarding this problem, read the discussion posts, and extract posts which contain solutions that are confirmed by at least one poster to have worked. Such a post would be considered a "Confirmed Solution", and an example may be: "I had this same problem, and I replaced my carburetor and that fixed it." The domain expert then includes this solution as an official, confirmed solution to the problem in the repair knowledge base.

Aspects of the disclosure generally relate to the semi-crowdsourced expert-in-the-loop extraction and compilation of diagnosis and repair knowledge. Given a repair problem, solution search criteria are obtained from one or more of an expert user, machine algorithm, or crowd worker. A search is then conducted, where the results are filters based on relevance and likelihood of containing confirmed solutions (*e*.*g*., using a confirmed-solution classifier). Crowd workers analyze the search results to find and extract confirmed solutions. The extracted solutions are checked to see if they already exist in a knowledge base. If the solutions don't exist, experts review the new solutions and add them to the knowledge base accordingly. Otherwise, the solutions are simply used to retrain the confirmed-solution classifier.

This method reduces cost by saving domain experts time in the search for solutions for inclusion in the knowledge base. The method achieves time saving by leveraging machine and low-cost crowd workers in the search effort; the domain experts need only to provide minimum initial search guidance and the final review and approval of extracted solutions. The bulk of the search and solution-extraction work is done by machine and crowd workers.

When domain experts read web forum posts to find solutions, they rely on sentence sentiment (*e*.*g*., phrasing) to identify confirmed solutions. The domain experts may identify key phrases such as "I had this same problem, and I did this to fix it" or "In my experience, these steps solved the problem" and so forth. This particular sentiment analysis can be performed by non-domain experts such as crowd workers, who can perform this task at lower cost than domain experts. However, while the crowd workers can understand sentence sentiment, the crowd workers may lack domain expertise and thus may be unable to correctly perform the initial search for sources related to the repair problem.

Thus, the disclosed approach combines the strengths of both the domain experts and crowd workers to extract solutions and compile knowledge bases at lower cost and at scale. The domain expert provides guidance for initial search, the machine performs the search and relays the results to the crowd workers for sentiment analysis to find confirmed solutions, and the domain expert then quickly reviews the extracted solutions and incorporates them into the knowledge base.

The knowledge that is learned from crowd and the expert is used to improve machine learning models. Small datasets initially created via crowdsourcing and/or domain expert get increased with various methods and new knowledge generated by the system. The model performance is improved with new datasets that are injected to the model and the system that creates crowdsourcing tasks and expert review tasks act like an active learning.

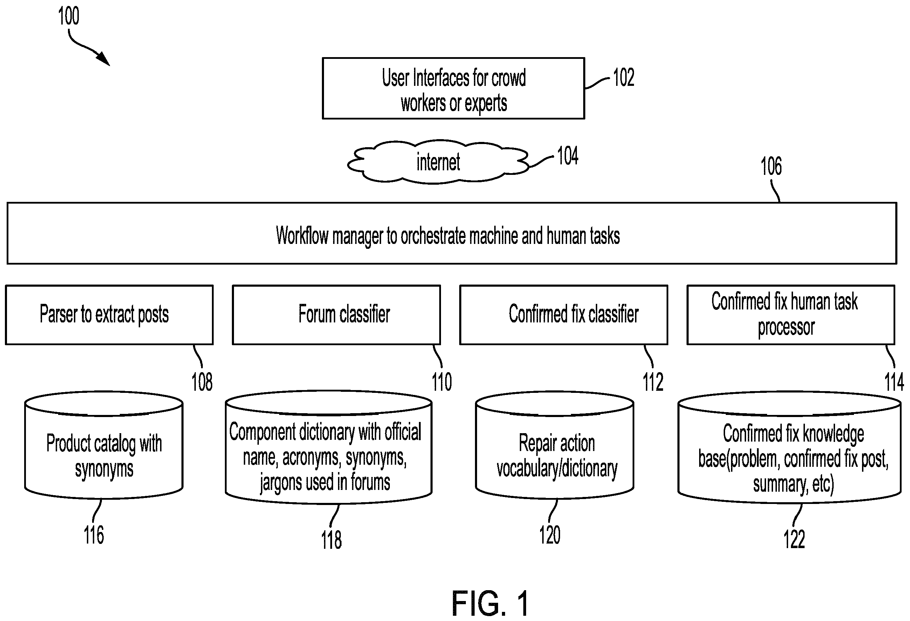

FIG. 1 illustrates an example system 100 for the semi-crowdsourced expert-in-the-loop solution-extraction for knowledge-base-building. As shown, the system includes user interfaces 102 for crowd workers and experts, a communications network 104 such as the Internet, and a workflow manager 106 to orchestrate the machine and human tasks. Under the operation of the workflow manager 106, the system 100 includes a parser 108 to extract posts, a forum classifier 110, a confirmed fix classifier 112, and a confirmed fix human task processor 114. With respect to data, the system 100 also includes a product catalog 116 that may contain synonyms for various terms and/or indications of comparable models; a component dictionary 118 including official names, acronyms, synonyms, and jargon that may be used in forums or other websites, a repair action vocabulary dictionary 120, and a confirmed fix knowledge base 122 storing indications of problems, confirmed fix posts, summaries, etc.

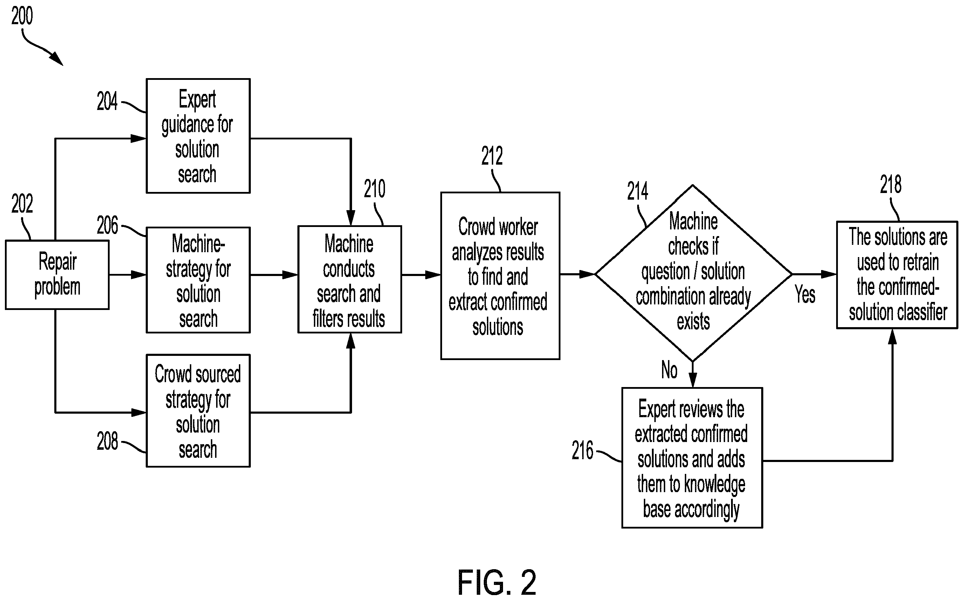

FIG. 2 illustrates a flow chart of a process 200 for semi-crowdsourced expert-in-the-loop solution-extraction for knowledge-base-building. The process 200 may be performed using aspects of the system 100 under the control of the workflow manager 106 mentioned above. As shown, the process begins at operation 202, at which a repair problem without a solution is given. Given the repair problem, a search strategy for solutions is given by one of three possibilities, expert guidance at operation 204, machine strategy at operation 206, or crowd-sourced strategy at 208.

At operation 204, domain experts provide initial guidance to machine for conducting an online solution search. This guidance may include, as some examples: product of interest details *(e.g.,* car make, model, year, engine type), search terms (inclusion criteria) for the repair problems (*e*.*g*., "shaking above 35 mph"), and/or exclusion criteria aspects which are commonly found through the inclusion criteria but that the experts know are not relevant (*e*.*g*., "intake valve").

In the alternative, at operation 206 machine strategy is utilized through leveraging domain vocabularies and/or domain models (*e*.*g*., car component dictionaries, action verb, etc.). As yet a further alternative, at operation 208, crowd workers may read the repair problem and form a search strategy (*e*.*g*., create a set of appropriate Google search terms). It should be noted that a combination of operations 204, 206, and 208 may be performed. As one combined possibility, the machine-generated search terms can also be optionally reviewed by experts. As another combined possibility, crowd-sourced search terms may be evaluated by machine in order to discard terms with low quality or relevance.

Regardless, from operations 204, 206 and 208, control proceeds to operation 210 at which a system 100 conducts searches based on product (*e*.*g*., vehicle) information and search terms provided by a domain expert along with machine support as described in operations 204, 206, and 208. Further the system 100 may filter the results for ones with high relevance to the original repair problem and from forums.

These searches may be performed by the parser 108, using various search APIs (*e.g*., Google(TM) Search API, Bing (TM) Search API, etc.). For instance, the searches may be used to retrieve a set of top *K* URLs (*e.g*., *K* = 30 URLs in one example). Web page types of interest may then be selected from the retrieved URLs. In an example, the URLs may be selected as being web discussion forums, but other examples are possible. The experience-based repair knowledge may require a confirmation of a fix for a proposed repair solution. Therefore, the original source should have an indication on "confirmed-fix" in comments in a web source provided by users or forum posting.

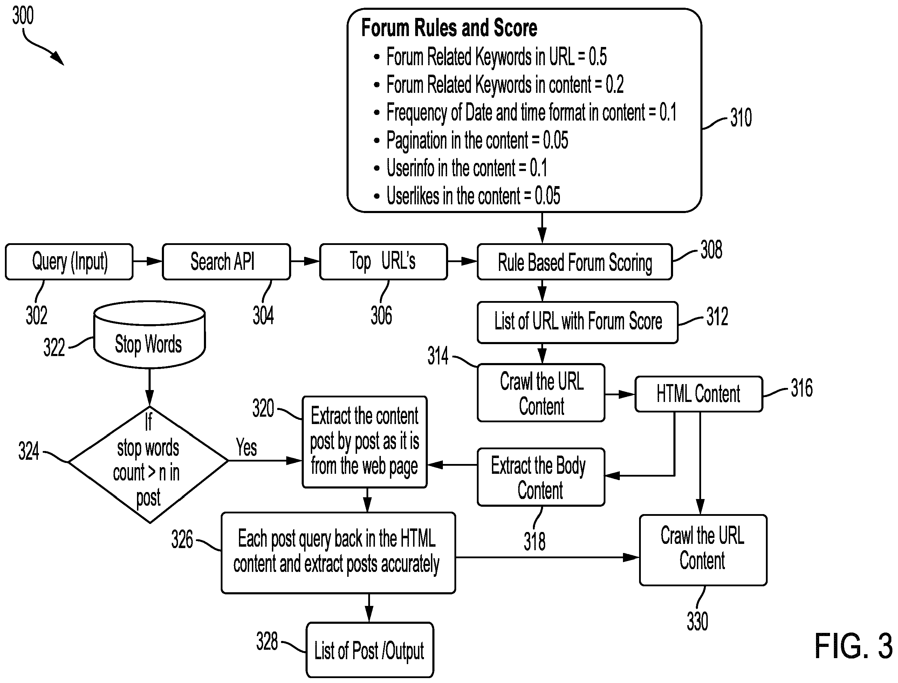

The system 100 may utilize the forum classifier 110 to perform forum classification based on rules and/or a machine learning model trained with positive and negative forum sources. Examples of heuristic rules include forum related keywords in URL and content, frequency of date and time format in the content, pagination in the content, user information in the content, and/or user likes in the content. These heuristics can be updated over time. Some examples of the heuristic rules are illustrated in FIG. 3, discussed in detail below.

The forum classifier 110 may also rank sources with high relevance. This ranking may include, for example, matching the search criteria (*e*.*g*., product information, problem, product components in problem (*e*.*g*., my engine is loud if a car problem) etc.) This ranking may also include using domain knowledge about products to do smarter searching / filter (*e*.*g*., identifying that since two vehicle models have the same engine, the system 100 may search for both when given one or the other). As another possibility, the ranking may include using a component dictionary to conduct searches with synonyms, including informal terms for product parts. The system 100 may also use a repair action vocabulary and/or dictionary that contains the action / verb / adjective synonyms to expand the search, *e.g.,* "fix / repair", "replace / change", "loud / noisy", etc. Different weights are applicable to the presence/location of relevant words in the HTML content. Based on the scores from product relevance and search term relevance, the sources may be sorted.

Presence of problem post, solution post and confirmed-fix solutions as detected by machine learning, using the confirmed-fix classifier 112. If the confirmed-fix probability score of a given web resource is above a threshold *(e.g.,* 90%) and/or below a lower bound *(e.g.,* 10%), then the operation 212 with crowd workers can be skipped. The source with a positive score is presented to the expert and the source with a negative score is discarded.

Construction of grounds truth for confirmed fix classifiers may be provided as follows, using the confirmed fix human task processor 114. Each post extracted from a web resource may be used to classify problem post, solution post and confirmed-fix post. An initial dataset may be constructed with crowdsourcing or domain expert's annotation. As for the problem post, the first post of each forum thread may be used. The initial dataset may contain small positive confirmed-fix posts where each post indicates positive sentiment about fixing a problem with a proposed solution. Note that majority of posts in the web sources often contain non-positive posts. The solution posts may be first identified by searching posts that contain/matches with terminologies of product parts in the domain component dictionary. The matching posts may be used for crowdsourcing or domain expert's annotation. Based on this initial dataset, additional keywords for positive confirmed fix post may be constructed by leveraging synonyms of keywords found in the positive post. For example, if a post includes language such as "it solved my problem," "work out," and "resolve" are added as synonym keywords for a keyword of "solve". Also, search/crawl/parse web sources may be used to find posts that contain keywords and terminologies in components dictionary and create crowdsourcing tasks to increase confirmed fix and solution positive posts in the dataset.

Training of the confirmed fix classifier 112 model may be performed as follows. The models may be trained with both positive and negative posts. Various machine learning algorithms such as multi-layer perception (MLP), random forest, logistic regression and deep learning classification models may be used for training models. Features used in the machine learning models may be vectorized with term frequency-inverse document frequency (TFIDF), a dependency parser and/or use of N-gram parsing, but these are non-limiting examples and the possibilities are not limited to those approaches. For sources with high confirmed-fix probability, the system 100 may use adjacent posts (to the confirmed-fix post) to classify solution post or not. Based on the score of product problem post prediction, confirmed fix post prediction and solution post prediction, the total prediction of a given resource may be estimated. Based on the prediction for a given resource, the system 100 determines if a resource is need for a crowdsourcing task or not.

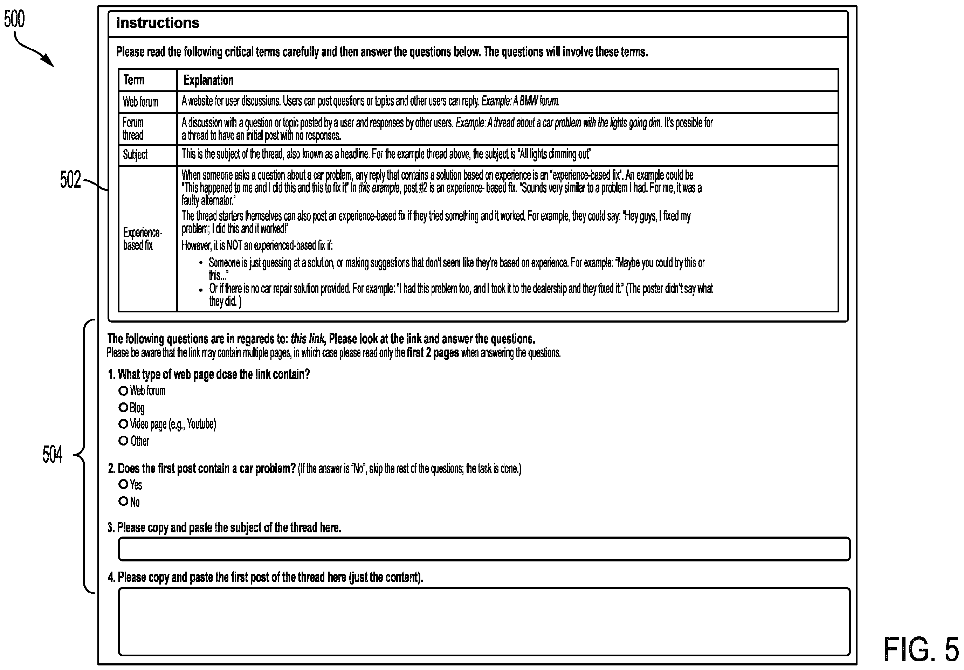

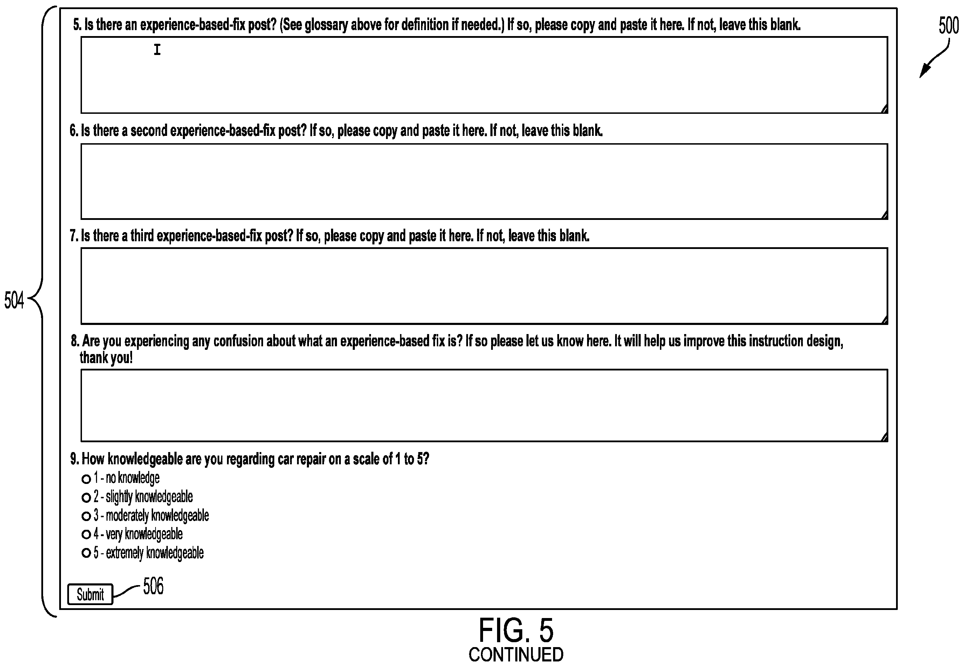

At operation 212, crowd workers analyze the search results filter by operation 210 to find and extract solutions. This may be accomplished, for example, via the confirmed fix human task processor 114 interacting with the user interfaces 102. For example, the search results may be a series of web forums discussing repair problems similar to the given problem, and crowd workers read the posts and find confirmed solutions based on the sentiment of the text *(e.g.,* "I had then same problem, and this is how I fixed it... "). An example template user interface for crowd workers to find and extract confirmed solutions from a machine-located forum thread is discussed below with respect to FIG. 5.

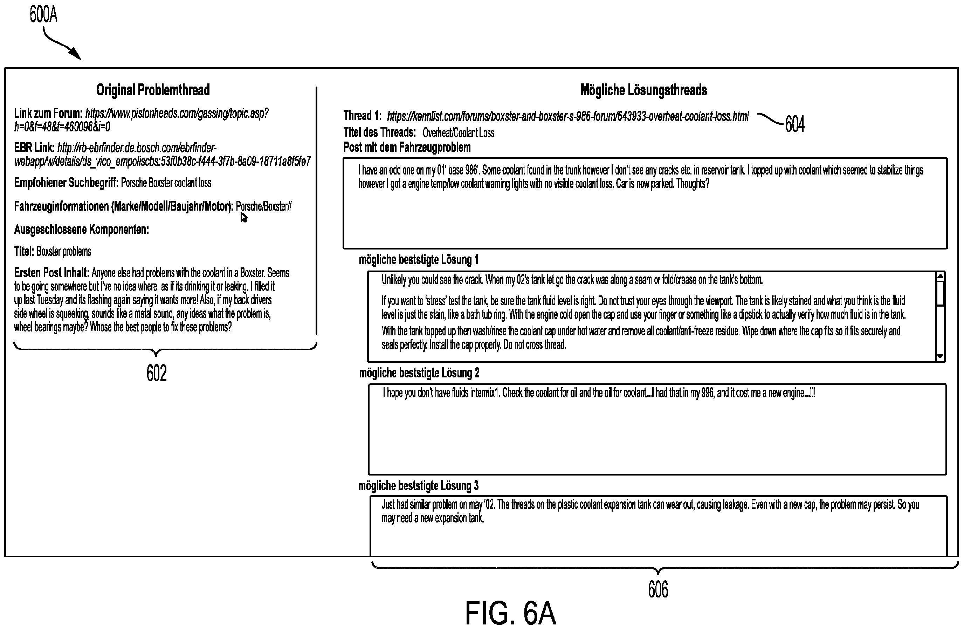

The crowd workers may verify that the search result web page is a source of repair information, e.g., a web forum thread discussing a particular car repair problem (examples of which are shown in FIGS. 6A-6C). The crowd workers may also read the discussion and extract content that appear to be confirmed solutions, *i*.*e*., solutions based on experience by a discussion participant. The crowd workers may also highlight and/or extract key terms and/or phrases that indicate confirmed-fix sentiment. These snippets may be used to train the confirmed-fix classifier 112 machine to be more accurate in confirmed-fix classification. Specifically, the system 100 may use these terms to find more possible confirmed-fix posts which then may be validated by crowd workers before being used as training data for the confirmed-fix classifier 112.

At operation 214, the system 100 uses a similarity computation to check whether the problem and solution combination already exists in the knowledge base. If not, then an expert may confirm and add it to the knowledge base 122 at operation 216. Otherwise, the results may be used only for improving the confirmed-fix classifier 112 at operation 218. Thus, at operation 218, the model performance is improved with new datasets that are injected into the confirmed-fix classifier 112 model such that the system 100 creates crowdsourcing tasks and expert review tasks to perform active learning.

FIG. 3 illustrates an example process 300 of forum classification and extraction for posts of a forum URL. The process 300 may be performed, for example, by the parser 108 and forum classifier 110 as mentioned above and describes further details of the process 200. As shown in further detail, a query is input or otherwise received at 302, such as mentioned with respect to operation 202. Based on the query, as discussed at operation 210 above searches are performed by the parser 108 at operation 304 to identify top URLs at operation 306.

At operation 308, the forum classifier 110 utilizes rule-based forum scoring to score the top URLs. These rules 310 may include for example, applying scoring based on various aspects of the content of the webpage of the URL. As some examples, if a forum-related keyword is located in the URL itself a first value may be applied to the URL *(e.g.,* 0.5), if a forum-related keyword is located in the content of the webpage a second value may be applied to the URL *(e.g.,* 0.2), if at least a frequency of data and time formats are found in the content a third value may be applied to the URL *(e.g.,* 0.1), if pagination is found in the content a fourth value may be applied to the URL *(e.g.,* 0.05), if user information is found in the content a fifth value may be applied to the URL *(e.g.,* 0.1), and/or if user likes are found in the content a sixth value may be applied to the URL *(e.g.,* 0.05).

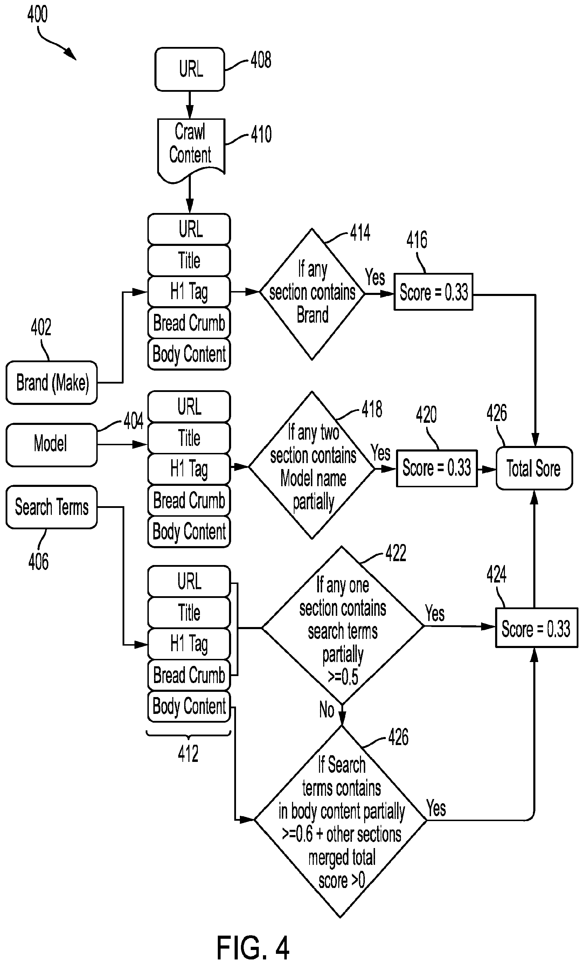

At operation 312, using the scoring rules, a list of the URLs is compiled. For instance, this list may include the URLs having the highest scores as determined at operation 308 using the rules 310. Further aspects of the URL scoring are described in FIG. 4 with respect to the process 400.

At operation 314, the forum classifier 110 crawls the URLs of the list to retrieve HTML content 316 from the URLs. The body content is extracted at operation 318 *(e.g.,* from the HTML markup into plain text without markup).

At operation 320, each post within the extracted body content is extracted from the web page. For instance, a database of stop words 322 may be used to determine post boundaries in situations where at least a predefined number of the stop words *(e.g.,* 3) are found in the post at operation 324. Based on each divided out post, at operation 326 each post is queried back into the HTML content to extract the post accurately. For example, this may involve retrieving the entire post as a separate web result.

At operation 328 the posts from the URLs are listed as output. Also, at operation 330, the URL content of the posts is also crawled for additional links that may be used to further inform the find operation.

FIG. 4 illustrates an example process 400 of scoring URLs with content matching. The process 400 describes further details of the operation 318 mentioned above. As shown, inputs to the process 400 include information such as a brand or make 402, a model 404, and search terms 406. As mentioned above the URL at 408 is crawled at 410 to produce crawl content. As shown the crawl content 412 may include data such as the URL from which the content was captured, a title of the webpage, the "HI" first header tag of the webpage, bread crumbs indicating how the search came to the URL, and the body content itself.

With respect to the brand or make 402, if at operation 414 any of these portions of the crawl content 412 include the brand or make 402 then the score for that URL may be increased at operation 416 *(e.g.,* by 1/3 on a scale of 0 to 1). With respect to the model 404, if at operation 418 any of these portions of the crawl content 412 include the model 404 then the score for that URL may be increased at operation 420 *(e.g.,* by 1/3 on a scale of 0 to 1). With respect to the search terms 406, if at operation 422 any of these portions of the crawl content 412 include at least partial (*e*.*g*., >= 0.5) search terms 406 then the score for that URL may be increased at operation 424 *(e.g.,* by 1/3 on a scale of 0 to 1). Or, if at operation 426 the body content includes at least partial (*e*.*g*., >= 0.6) search terms 406 and other sections have a merged total score greater than zero, the score for that URL may also be increased at operation 424. At operation 426, the total score from each of the operations 416, 420, and 424 is totaled to determine the total score *(e.g.,* on a scale of 0 to 1).

FIG. 5 illustrates an example user interface 500 for a template user interface for crowd workers to find and extract confirmed solutions from a machine-located forum thread. This user interface 500 may include, for example, instructions 502 to explain to a crowd worker how to fill out the form. The user interface 500 may further include a listing of questions 504 to be answered by the crowd worker. Once the questions 504 are completed, the user utilizing a submit 506 control of the user interface to submit the answers to the system 100.

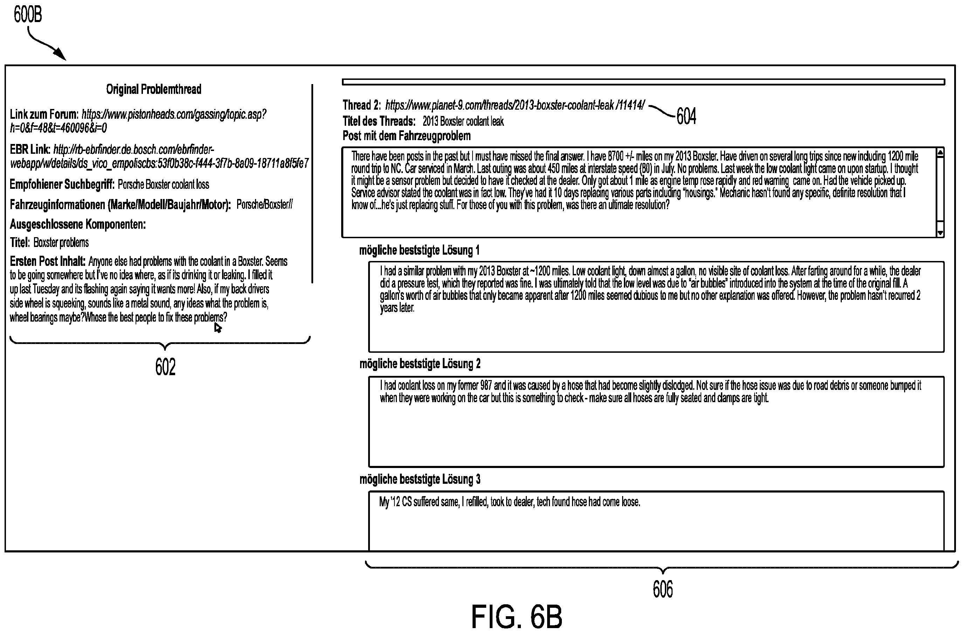

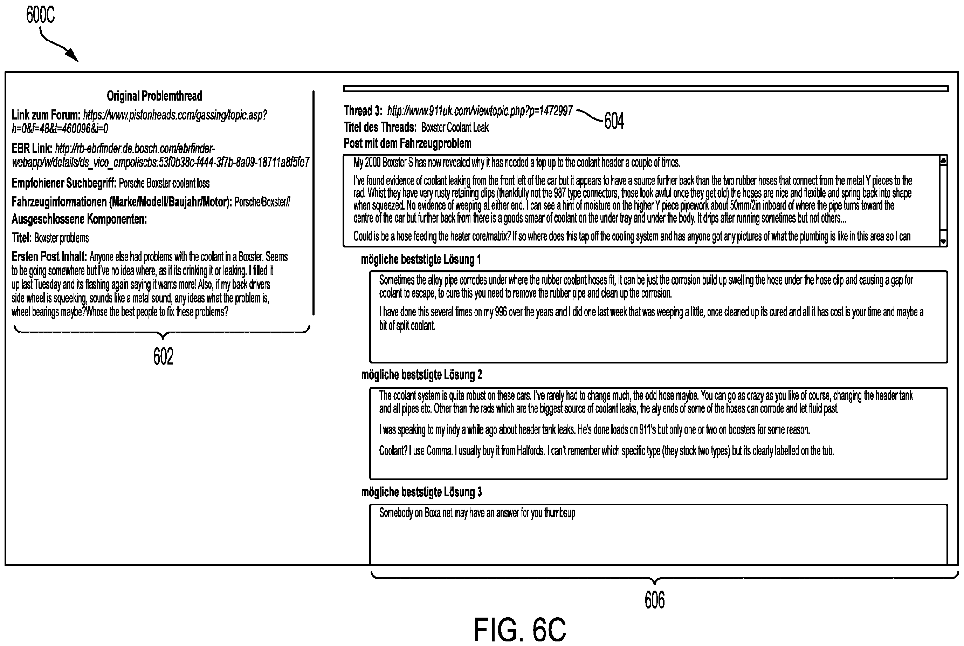

FIGS. 6A, 6B, and 6C each illustrate example template user interfaces 600A, 600B, 600C for expert review of extracted solutions from crowd workers. The user interfaces 600A, 600B, 600C include information with respect to a problem 602 to be solved, as well as a URL location 604 of a thread discussing the problem and posts 606 of the thread from the URL. As shown, each of the FIGS. 6A, 6B, and 6C illustrates a different URL location 604 thread and corresponding posts 606 for the same problem 602.

Thus, by using the describes systems and method, semi-crowdsourced expert-in-the-loop information capture is provided. Solution search criteria for a repair problem are obtained from one or more of an expert user or a machine algorithm. A search is conducted according to the solution search criteria to identify search results. The search results are filtered according to relevance and likelihood of containing confirmed solutions using a confirmed-solution classifier. The search results are provided to crowd workers for analysis to find and extract confirmed solutions. If the solutions do not exist in a knowledge base, the extracted confirmed solutions are provided for expert review and adding the extracted confirmed solutions, as reviewed, to the knowledge base. Otherwise if the solutions already exist in the knowledge base, the extracted confirmed solutions are used to retrain the confirmed-solution classifier.

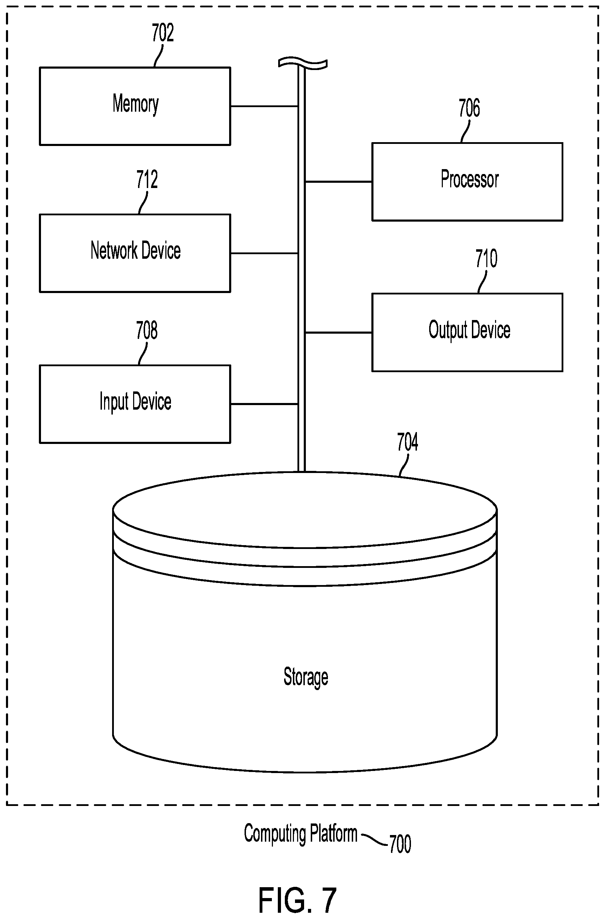

The algorithms and/or methodologies of one or more embodiments discussed herein are implemented using a computing device, such as the computing platform 700 illustrated in FIG. 7. The computing platform 700 may include memory 702, a non-volatile storage 704, a processor 706, an input device 708, an output device 710, and a network device 712.

The memory 702 may include a single memory device or a number of memory devices including, but not limited to, random access memory (RAM), volatile memory, non-volatile memory, static random access memory (SRAM), dynamic random access memory (DRAM), flash memory, cache memory, or any other device capable of storing information. The non-volatile storage 704 may include one or more persistent data storage devices such as a hard drive, optical drive, tape drive, non-volatile solid-state device, cloud storage or any other device capable of persistently storing information.

The processor 706 may include one or more devices selected from high-performance computing (HPC) systems including high-performance cores, microprocessors, micro-controllers, digital signal processors, microcomputers, central processing units (CPU), graphical processing units (GPU), tensor processing units (TPU), field programmable gate arrays, programmable logic devices, state machines, logic circuits, analog circuits, digital circuits, or any other devices that manipulate signals (analog or digital) based on computer-executable instructions residing in memory 702.

The processor 706 may be configured to read into memory 702 and execute computer-executable instructions residing in the non-volatile storage 704. Upon execution by the processor 706, the computer-executable instructions may cause the computing platform 700 to implement one or more of the algorithms and/or methodologies disclosed herein.

The computing platform 700 may further include one or more input devices 708, such as buttons and/or touch-sensitive displays screens, and output devices 710 such as lights, speakers, and/or display screens. The computing platform 700 may also include one or more network devices 712, such as modems or other wired or wireless transceivers that may be used to allow the computing platform 700 to communicate with other computing platforms 700 over a communications network.

Computer-readable program instructions stored in a computer readable medium may be used to direct a computer, other types of programmable data processing apparatus, or other devices to function in a particular manner, such that the instructions stored in the computer readable medium produce an article of manufacture including instructions that implement the functions, acts, and/or operations specified in the flowcharts or diagrams. In certain alternative embodiments, the functions, acts, and/or operations specified in the flowcharts and diagrams may be re-ordered, processed serially, and/or processed concurrently consistent with one or more embodiments. Moreover, any of the flowcharts and/or diagrams may include more or fewer nodes or blocks than those illustrated consistent with one or more embodiments.

While exemplary embodiments are described above, it is not intended that these embodiments describe all possible forms of the invention. Rather, the words used in the specification are words of description rather than limitation, and it is understood that various changes may be made without departing from the spirit and scope of the invention. Additionally, the features of various implementing embodiments may be combined to form further embodiments of the invention.

## Claims

1. A method for semi-crowdsourced expert-in-the-loop information capture, comprising:
obtaining solution search criteria for a repair problem from one or more of an expert user, machine algorithm, or crowd worker;
conducting a search according to the solution search criteria to identify search results;
filtering the search results according to relevance and likelihood of containing confirmed solutions using a confirmed-solution classifier;
providing the search results to crowd workers for analysis to find and extract confirmed solutions;
if the solutions do not exist in a knowledge base, providing the extracted confirmed solutions for expert review and adding the extracted confirmed solutions, as reviewed, to the knowledge base; and
otherwise if the solutions already exist in the knowledge base, using the extracted confirmed solutions to retrain the confirmed-solution classifier.

2. The method of claim 1, wherein the confirmed-solution classifier is trained to identify, in a search result, presence of (i) a problem post indicative of the repair problem, (ii) a solution post indicative of a solution to the repair problem, and (iii) a confirmed-fix indication validating that the solution post provides a working solution.

3. The method of claim 2, further comprising:
identifying, for each search result, a confirmed-fix probability score for the search result; and
responsive to the confirmed-fix probability score being greater than a predefined threshold adding the extracted confirmed solutions to the knowledge base skipping the expert review.

4. The method of claim 1, further comprising training to confirmed-solution classifier using a training dataset of positive and negative posts using a training model including one or more of a multi-layer perception (MLP), a random forest, a logistic regression, or a deep learning classification model,
wherein, in the training dataset, a first post of each forum thread is identified as being a problem post, one or more solution posts are identified as including matching terminology from a domain dictionary, and confirmed-fix indications are identified according to sentiment or occurrence of positive fix keywords.

5. The method of claim 1, wherein conducting the search includes:
identifying a plurality of initial search results by universal resource locator (URL) based on the solution search criteria;
scoring the initial search results according to predefined rules, the rules relating to occurrence of keywords from a domain dictionary in content and/or URL of the initial search results; and
crawling the initial search results with the highest scores to extract posts from the content of the URLs to generate the search results.

6. The method of claim 1, further comprising providing a solution from the knowledge base to resolve the repair problem.

7. The method of claim 1, wherein the repair problem relates to an automotive repair.

8. A system for semi-crowdsourced expert-in-the-loop information capture, comprising:
a computing platform including a hardware processor, programmed to:
obtain solution search criteria for a repair problem from one or more of expert user, machine algorithm, or crowd worker;
conduct a search according to the solution search criteria to identify search results;
filter the search results according to relevance and likelihood of containing confirmed solutions using a confirmed-solution classifier;
provide the search results to crowd workers for analysis to find and extract confirmed solutions;
if the solutions do not exist in a knowledge base, provide the extracted confirmed solutions for expert review and adding the extracted confirmed solutions, as reviewed, to the knowledge base; and
otherwise if the solutions already exist in the knowledge base, use the extracted confirmed solutions to retrain the confirmed-solution classifier.

9. The system of claim 8, wherein the confirmed-solution classifier is trained to identify, in a search result, presence of (i) a problem post indicative of the repair problem, (ii) a solution post indicative of a solution to the repair problem, and (iii) a confirmed-fix indication validating that the solution post provides a working solution.

10. The system of claim 9, wherein the computing platform is further programmed to:
identify, for each search result, a confirmed-fix probability score for the search result; and
responsive to the confirmed-fix probability score being greater than a predefined threshold add the extracted confirmed solutions to the knowledge base skipping the expert review.

11. The system of claim 8, wherein the computing platform is further programmed to train to confirmed-solution classifier using a training dataset of positive and negative posts using a training model including one or more of a multi-layer perception (MLP), a random forest, a logistic regression, or a deep learning classification model,
wherein, in the training dataset, a first post of each forum thread is identified as being a problem post, one or more solution posts are identified as including matching terminology from a domain dictionary, and confirmed-fix indications are identified according to sentiment or occurrence of positive fix keywords.

12. The system of claim 8, wherein the computing platform is further programmed to:
identify a plurality of initial search results by universal resource locator (URL) based on the solution search criteria;
score the initial search results according to predefined rules, the rules relating to occurrence of keywords from a domain dictionary in content and/or URL of the initial search results; and
crawl the initial search results with the highest scores to extract posts from the content of the URLs to generate the search results.

13. The system of claim 8, wherein the computing platform is further programmed to provide a solution from the knowledge base to resolve the repair problem.

14. The system of claim 8, wherein the repair problem relates to an automotive repair.

15. A non-transitory computer readable medium comprising instructions for semi-crowdsourced expert-in-the-loop information capture that, when executed by a processor of a computing device, cause the computing device to perform operations including to:
obtain solution search criteria for a repair problem from one or more of expert user, machine algorithm, or crowd worker;
conduct a search according to the solution search criteria to identify search results;
filter the search results according to relevance and likelihood of containing confirmed solutions using a confirmed-solution classifier;
provide the search results to crowd workers for analysis to find and extract confirmed solutions;
if the solutions do not exist in a knowledge base, provide the extracted confirmed solutions for expert review and adding the extracted confirmed solutions, as reviewed, to the knowledge base; and
otherwise if the solutions already exist in the knowledge base, use the extracted confirmed solutions to retrain the confirmed-solution classifier.

16. The medium of claim 15, wherein the confirmed-solution classifier is trained to identify, in a search result, presence of (i) a problem post indicative of the repair problem, (ii) a solution post indicative of a solution to the repair problem, and (iii) a confirmed-fix indication validating that the solution post provides a working solution.

17. The medium of claim 16, further comprising instructions that, when executed by the processor of the computing device, cause the computing device to perform operations including to:
identify, for each search result, a confirmed-fix probability score for the search result; and
responsive to the confirmed-fix probability score being greater than a predefined threshold add the extracted confirmed solutions to the knowledge base skipping the expert review.

18. The medium of claim 15, further comprising instructions that, when executed by the processor of the computing device, cause the computing device to perform operations including to train to confirmed-solution classifier using a training dataset of positive and negative posts using a training model including one or more of a multi-layer perception (MLP), a random forest, a logistic regression, or a deep learning classification model,
wherein, in the training dataset, a first post of each forum thread is identified as being a problem post, one or more solution posts are identified as including matching terminology from a domain dictionary, and confirmed-fix indications are identified according to sentiment or occurrence of positive fix keywords.

19. The medium of claim 15, further comprising instructions that, when executed by the processor of the computing device, cause the computing device to perform operations including to:
identify a plurality of initial search results by universal resource locator (URL) based on the solution search criteria;
score the initial search results according to predefined rules, the rules relating to occurrence of keywords from a domain dictionary in content and/or URL of the initial search results; and
crawl the initial search results with the highest scores to extract posts from the content of the URLs to generate the search results.

20. The medium of claim 15, further comprising instructions that, when executed by the processor of the computing device, cause the computing device to perform operations including to provide a solution from the knowledge base to resolve the repair problem.
